Europäisches Patentamt

European Patent Office

Office européen des brevets

(11) Veröffentlichungsnummer: **0 127 041**
**A1**

## (12) EUROPÄISCHE PATENTANMELDUNG

(21) Anmeldenummer: **84105410.9**

(22) Anmeldetag: **12.05.84**

(51) Int. Cl.³: **C 03 B 37/025**
**C 03 B 17/04, B 05 D 1/06**
**C 03 B 20/00, G 02 B 5/14**

(30) Priorität: **28.05.83 DE 3319448**

(43) Veröffentlichungstag der Anmeldung:
**05.12.84 Patentblatt 84/49**

(84) Benannte Vertragsstaaten:
**AT BE CH DE FR GB IT LI LU NL SE**

(71) Anmelder: **International Standard Electric Corporation**
**320 Park Avenue**
**New York New York 10022(US)**

(84) Benannte Vertragsstaaten:
**BE CH FR GB IT LI LU NL SE AT**

(71) Anmelder: **Standard Elektrik Lorenz Aktiengesellschaft**
**Hellmuth-Hirth-Strasse 42**
**D-7000 Stuttgart 40(DE)**

(84) Benannte Vertragsstaaten:
**DE**

(72) Erfinder: **Kimmich, Klaus**
**Hohentwielstrasse 14**
**D-7000 Stuttgart 1(DE)**

(72) Erfinder: **Oswald, Michael**
**Breslauer Strasse 5**
**D-7141 Schwieberdingen(DE)**

(74) Vertreter: **Graf, Georg Hugo, Dipl.-Ing. et al,**
**c/o Standard Elektrik Lorenz AG Patent- und**
**Lizenzwesen Postfach 300 929 Kurze Strasse 8**
**D-7000 Stuttgart 30(DE)**

(54) Verfahren zur Herstellung von Lichtwellenleitern.

(57) Es wird ein neues Verfahren zur Herstellung von Lichtwellenleitern vorgeschlagen, bei dem zur Herstellung der Vorform pulverförmiges Glasausgangsmaterial auf einem Grundkörper abgeschieden wird, indem es vor der Abscheidung elektrostatisch aufgeladen und mittels einer Gegenelektrode in Richtung auf die zu beschichtende Fläche des Grundkörpers beschleunigt wird. Falls der Grundkörper ein stabförmiger Grundkörper (1) ist, der aus leitendem Material gefertigt sein kann, kann dieser Grundkörper selbst als Gegenelektrode verwendet werden. Falls der Grundkörper ein Glasrohr ist, dessen Innenfläche durch Abscheidung des pulverförmigen Glasausgangsmaterials beschichtet werden soll, dient als Gegenelektrode eine Ringförmige, das Glasrohr (10) umgebende Elektrode (16). Die Aufladung der Partikel des pulverförmigen Glasausgangsmaterials, das auf die zu beschichtende Fläche aufgesprüht wird, erfolgt beim Austritt aus einer Sprühvorrichtung (2), deren Sprühdüse (3) auf Hochspannung gelegt wird. Nach Abscheidung einer oder mehrerer Schichten wird das aufgebrachte Material gesintert und dabei elektrisch entladen.

Fig.1

EP 0 127 041 A1

K.Kimmich-M.Oswald 8-1

Verfahren zur Herstellung von Lichtwellenleitern

Die Erfindung betrifft ein Verfahren nach dem Oberbegriff des Patentanspruchs 1.

Ein derartiges Verfahren wurde in der älteren deutschen Patentanmeldung P 33 04 552 vorgeschlagen. Bei diesem Verfahren wird pulverförmiges Glasausgangsmaterial mittels einer Gasströmung in eine wärmeerzeugende Vorrichtung eingeleitet, in dieser verflüssigt oder verdampft und nach Kondensation auf dem Grundkörper abgeschieden. Das Verdampfen oder Verflüssigen der Pulverpartikel bedeutet einen beträchtlichen Energieaufwand.

Es ist daher die Aufgabe der Erfindung, ein Verfahren anzugeben, bei dem das pulverförmige Glasausgangsmaterial ohne Verwendung einer wärmeerzeugenden Vorrichtung mit anderen Mitteln auf dem zu beschichtenden Grundkörper abgeschieden wird.

Die Aufgabe wird wie im Patentanspruch 1 angegeben gelöst. Weiterbildungen ergeben sich aus den Unteransprüchen.

Aus der DE-PS 30 27 450 ist ein Verfahren bekannt, bei dem auf der Innenfläche eines Glasrohres pulverförmiges Glas-

K.Kimmich- 8-1

ausgangsmaterial aus einer chemischen Dampfphasenreaktion abgeschieden wird, und bei dem die Abscheidung mit elektrostatischen Mitteln unterstützt wird. Eine Aufladung des in der chemischen Dampfphasenreaktion erzeugten und abzuscheidenden pulverförmigen Glasausgangsmaterials erfolgt dabei nicht. Im Gegensatz hierzu wird bei der vorliegenden Erfindung das abzuscheidende pulverförmige Glasausgangsmaterial nicht in einer mit der Abscheidung gekoppelten chemischen Dampfphasenreaktion erzeugt, sondern als Ausgangsmaterial des Abscheideprozesses bereitgestellt und vor der Abscheidung elektrostatisch aufgeladen.

Die Erfindung wird nun anhand der Zeichnungen beispielsweise näher erläutert. Es zeigt:

Fig. 1    eine Vorrichtung zur Durchführung des erfindungsgemäßen Verfahrens, wobei ein stabförmiger Grundkörper auf seiner Außenfläche beschichtet wird, und

Fig. 2    eine Vorrichtung zur Durchführung des erfindungsgemäßen Verfahrens, wobei ein Glasrohr auf seiner Innenfläche beschichtet wird.

Verfahren zur Herstellung von Lichtwellenleitern, bei denen ein stabförmiger Grundkörper auf seiner Außenfläche oder ein Glasrohr auf seiner Innenfläche durch Abscheidung von pulverförmigem Glasausgangsmaterial beschichtet wird, sind an sich vielfach bekannt. Neu ist in diesem Zusammenhang, daß bei der Beschichtung das pulverförmige Glasausgangsmaterial nicht erst erzeugt, sondern als vorgefertigtes Material bereitgestellt wird und daß das pulverförmige

K.Kimmich 8-1

Glasausgangsmaterial vor der Abscheidung elektrostatisch aufgeladen und durch eine Gegenelektrode derart angezogen wird, daß es sich auf der zu beschichtenden Fläche abscheidet.

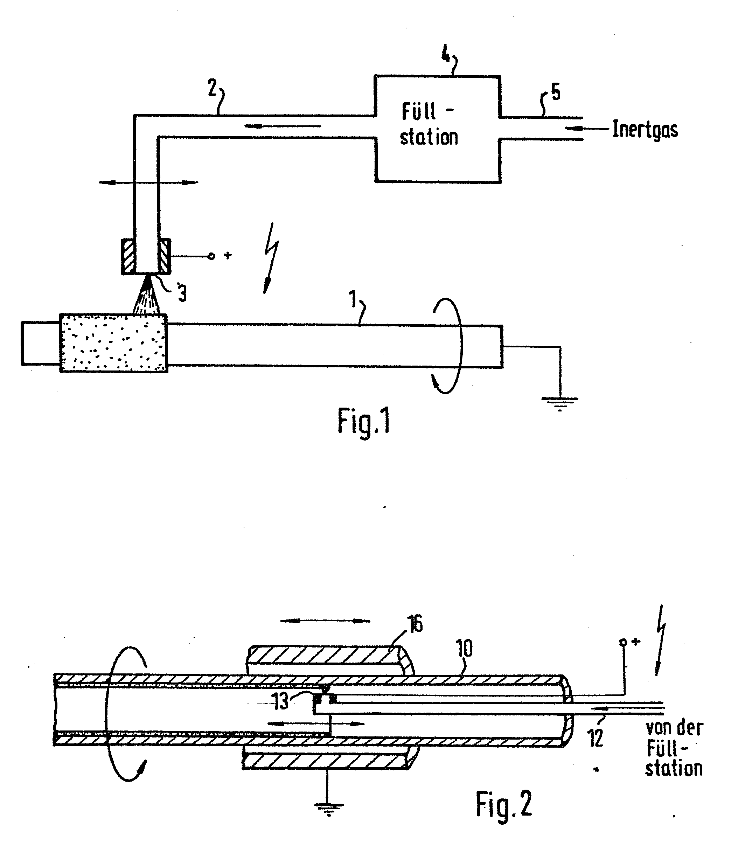

Diese Fläche ist bei Fig. 1 die Außenfläche eines stabförmigen Grundkörpers 1, der aus einem leitenden Material, beispielsweise aus Graphit besteht. Mit an sich bekannten und daher nicht gezeigten Mitteln wird dieser stabförmige Grundkörper 1 während der Beschichtung um seine Längsachse gedreht. Die Beschichtung erfolgt nun dadurch, daß das pulverförmige Material mittels einer Sprühvorrichtung 2, an deren Austrittsende sich eine Sprühdüse 3 befindet, gleichmäßig auf den Grundkörper aufgesprüht wird. Die Sprühvorrichtung 2 weist eine Füllstation 4 auf, in die an einem Einlaßrohr 5 ein Inertgas mit einem geeigneten Druck eingeleitet wird und das homogene Gas- Pulver-Gemisch erzeugt, das in die Sprühvorrichtung 2 eingeleitet wird. Die Füllstation enthält in mehreren getrennten Vorratsbehältern verschiedene pulverförmige Glasausgangsmaterialien, beispielsweise reines Siliziumdioxid und Mischungen von reinem Siliziumdioxid mit Dotiermitteln, ebenfalls in pulvriger Form, beispielsweise mit Germaniumdioxid. Abhängig davon, welche Zusammensetzung die abzuscheidende Schicht haben soll, erzeugt die Füllstation die geeignete Zusammensetzung des pulverförmigen Glasausgangsmaterials, das als Gas- Pulver-Gemisch oder Pulverströmung in die Sprühvorrichtung unter einem geeigneten Druck eingeleitet wird. Die pro Zeiteinheit in die Sprühvorrichtung einströmende Pulvermenge kann mittels eines nicht gezeigten Massenflußreglers mit guter Genauigkeit geregelt werden.

K.Kimmich 8-1

Die Sprühdüse 3 besteht aus einem leitenden Material und ist gegen die Füllstation 4 elektrisch isoliert. Sie wird mit Hilfe eines geeigneten Generators auf Hochspannung gelegt, wie in Fig. 1 gezeigt beispielsweise auf eine positive Hochspannung. Der aus leitfähigem Material bestehende Grundkörper 1 wird auf Erdpotential (oder negatives Potential) gelegt. Somit laden sich beim Austritt aus der Düse die Partikel der Pulverströmung elektrostatisch auf und werden von dem auf Erdpotential (oder negativem Potential) liegenden Grundkörper angezogen. Um eine gleichmäßige Beschichtung zu erzielen, werden die Sprühdüse 3 und die zu beschichtende Oberfläche relativ zueinander bewegt. Wie mit dem Doppelpfeil angedeutet, wird hierzu die Sprühdüse 3 parallel zur Längsachse des stabförmigen Grundkörpers 1 bewegt, während dieser um seine Längsachse rotiert. Um aus dem abgeschiedenen pulverförmigen Material eine selbsthaftende, feste Schicht zu erzeugen, wird das abgeschiedene Material anschließend erhitzt, so daß eine Sinterung erfolgt, bei der die Partikel an ihrer Oberfläche zusammenschmelzen und dadurch eine zusammenhängende, jedoch noch poröse Schicht entsteht. Bei diesem Sintervorgang wird gleichzeitig aufgrund der zugeführten Wärme die elektrische Ladung der aufgebrachten Schicht beseitigt. Es gibt nun verschiedene Möglichkeiten, die Sinterung durchzuführen.

Im Normalfalle werden mehrere aufeinanderfolgende Schichten auf dem Grundkörper 1 aufgebracht. Je nach Dicke der aufgebrachten Schichten wird es zweckmäßig sein, sie einzeln oder zu mehreren zu Sintern. Die Sinterung einer einzelnen Schicht unmittelbar nach ihrer Aufbringung läßt sich dadurch erreichen, daß der Sprühdüse 3 in einem geeigneten Abstand ein nicht gezeigter Brenner nachgeführt wird, dessen

K.Kimmich 8-1

Flamme das abgeschiedene Material im gleichen Beschichtungsdurchgang erhitzt und sintert. Im einfachsten Falle ist dieser Brenner starr mit derjenigen Vorrichtung verbunden, welche auch die Sprühdüse 3 entlang der Längsachse des stabförmigen Grundkörpers 1 verschiebt. Bei dieser Art der Sinterung, die sich unmittelbar an die Beschichtung anschließt, ist die aufgebrachte Schicht elektrisch entladen, bevor auf ihr die nächste Schicht aufgebracht wird. Dadurch ist sichergestellt, daß die anziehende Wirkung des Grundkörpers 1 auf die aus der Sprühdüse austretenden geladenen Partikel nicht durch eine auf dem Grundkörper befindliche Schicht mit einer abstoßenden Wirkung auf die aus der Sprühdüse 3 austretenden Partikel beeinträchtigt wird. Für den Fall, daß man erst nach mehreren aufgebrachten Schichten die Sinterung durchführt, ist es möglich, die abstoßende Wirkung der bereits aufgebrachten geladenen Schichten durch eine vermehrte Aufladung, der aus der Sprühdüse 3 austretenden Partikel zu kompensieren. Dies läßt sich dadurch erreichen, daß man die an der Sprühdüse liegende Hochspannung variabel macht und von Schicht zu Schicht in geeigneter Weise erhöht.

Fig. 2 zeigt die Anwendung des erfindungsgemäßen Verfahrens auf das an sich bekannte Verfahren der Rohr- Innenbeschichtung. Der zu beschichtende Grundkörper ist bei diesem Verfahren ein Glasrohr, also ein elektrischer Isolator im Gegensatz zum Grundkörper beim Außenbeschichtungsverfahren, der ein elektrischer Leiter, beispielsweise Graphit sein kann. Daher kann dieser Grundkörper nicht wie der in Fig. 1 selbst die anziehende Gegenelektrode bilden, sondern muß von einer solchen Gegenelektrode zumindest in dem Bereich, in dem die Abscheidung erfolgen soll, umgeben sein. Um

K.Kimmich 8-1

eine gleichmäßige Innenbeschichtung des Glasrohres zu erzielen, wird bei dem in Fig. 2 gezeigten Verfahren eine Sprühdüse 13 verwendet, die sich am Ende eines starren Zuführungsrohres 12 einer Sprühvorrichtung befindet und so klein ist, daß dieses Zuführungsrohr 12 mit der am Ende befindlichen Sprühdüse 13 in das Innere des zu beschichtenden Glasrohres 10 eingeführt werden kann. Diese Sprühdüse 13 wird nun innerhalb des Rohres 10 entlang der Längsachse des Rohres verschoben und besprüht die Innenfläche des Rohres, das während dieses Vorgangs um seine Längsachse gedreht wird, um eine gleichmäßige Beschichtung zu gewährleisten. Das Glasrohr 10 ist entweder nur in dem Bereich, in dem die Beschichtung stattfindet oder auf seiner ganzen Länge von einer Gegenelektrode 16 umgeben, die auf Erdpotential (oder negativem Potential) liegt, und die Sprühdüse 13 wird wie die der in Fig. 1 gezeigten Anordnung auf eine positive Hochspannung gelegt und gegen die Füllstation elektrisch isoliert, so daß die aus ihr austretenden Partikel der Pulverströmung elektrostatisch aufgeladen und durch die das Glasrohr umgebende Gegenelektrode in Richtung der Rohrinnenwand angezogen werden. Fig. 2 zeigt eine Ausführungsform mit einer Gegenelektrode 16, die das Glasrohr 10 nur in dem Bereich der Beschichtung umgibt und synchron mit der Sprühdüse 13 entlang der Längsachse des Glasrohres 10 verschoben wird.

Soll, wie im Zusammenhang mit der Anordnung nach Fig. 1 erwähnt, jede Schicht unmittelbar nach ihrer Abscheidung gesintert werden, so wird an der Außenseite des rotierenden Glasrohres eine Wärmequelle, z. B. ein Ringbrenner, in einem geeigneten Abstand der in Längsrichtung verschobenen Sprüh-

K.Kimmich 8-1

düse nachgeführt, indem die Wärmequelle starr mit der die Sprühdüse 13 verschiebenden Vorrichtung verbunden ist. Dies ist unabhängig davon, ob eine räumlich begrenzte, synchron mitbewegte Gegenelektrode16 oder eine das gesamte Rohr umgebende, unbewegte Gegenelektrode verwendet wird. Im letzteren Falle müßte die Gegenelektrode das Glasrohr 10 in einem solchen Abstand umgeben, daß im verbleibenden Zwischenraum die Wärmequelle bewegt werden kann.

Hinsichtlich der geometrischen Ausführungen der Sprühdüse 13 gibt es verschiedene Möglichkeiten. Die Sprühdüse 13 kann,wie in Fig. 2 gezeigt,so ausgebildet sein, daß sie die in sie einströmende Pulverströmung im rechten Winkel umlenkt und in radialer Richtung auf die Rohrinnenwand aufsprüht, wobei die Pulverströmung mehr oder weniger punktförmig auf die Rohrinnenwand gerichtet wird. Sie kann aber auch so ausgebildet sein, daß sie die Pulverströmung rotationssymetrisch zur Längsachse des Glasrohres auf die Rohrinnenwand richtet. Strömungstechnisch erscheint es dabei günstig, wenn die durch das Zuführungsrohr 12 eingeleitete Pulverströmung nicht im rechten Winkel, sondern unter einem kleineren Winkel in Richtung auf die Rohrinnenwand umgelenkt wird. Eine nach Art eines geöffneten Kegels teilweise in Vorwärtsrichtung und teilweise in radialer Richtung aus der Sprühdüse austretende Pulverströmung sollte also von der Sprühdüse 13 erzeugt werden. Die an der Sprühdüse 13 liegende Hochspannung sollte aus den oben angegebenen Gründen eine variable Hochspannung sein. Hinsichtlich der Erzeugung der über das Zuführungsrohr 12 der Sprühdüse 13 zugeführten Pulverströmung in einer Füllstation wird auf die entsprechenden Erläuterungen zur Anordnung nach Fig. 1 verwiesen.

K.Kimmich 8-1

Es sei noch erwähnt, daß es mit dem beschriebenen Verfahren möglich ist, die Dicken der nacheinander aufgebrachten Schichten mit hoher Genauigkeit zu steuern. Damit ist es möglich, die in einer älteren Anmeldung P 32 15 791 vorgeschlagene Abstufung der aufeinanderfolgenden Schichtdicken auch bei diesen neuen Verfahren anzuwenden. Diese Abstufung dient dazu, die bei der während der Weiterverarbeitung des durch Beschichtung entstandenen Körpers stattfindende geometrische Transformation, welche bei gleichen Dicken der aufgebrachten Schichten die Exaktheit des angestrebten Brechungsindexprofils beeinträchtigen würde, auszugleichen. Die Schichtdicken werden derart abgestuft, daß bei der anschließenden geometrischen Transformation Schichten mit gleichen Dicken in der Vorform entstehen.

Das beschriebene erfindungsgemäße Verfahren der elektrostatischen Beschichtung hat gegenüber bekannten Verfahren, bei denen das Material aus einer chemischen Dampfphasenreaktion abgeschieden wird, die entweder in einer Flamme oder (bei der Innenbeschichtung) in einem von außen erhitzten Glasrohr stattfindet, den Vorteil, daß es beträchtlich höhere Abscheideraten ermöglicht und damit eine kostengünstigere Herstellung von Lichtwellenleitern erlaubt. Falls das neue Verfahren parallel neben den bekannten Verfahren angewendet wird, hat es den zusätzlichen Vorteil, daß es die Wiederverwendung des bei diesen Verfahren erzeugten, jedoch nicht abgeschiedenen pulverförmigen Glasausgangsmaterials ermöglicht, das ansonsten verloren ginge.

Die Weiterverarbeitung des durch das erfindungsgemäße Verfahren der elektrostatischen Beschichtung hergestellten Gebilde geschieht nun in einer Weise, die an sich bekannt

K.Kimmich 8-1

ist, d. h. durch Erschmelzen der abgeschiedenen Schichten, die nach der Sinterung zwar zusammenhängend, jedoch noch porös sind, zu einem glasigen Schichtkörper (im Falle der Außenbeschichtung nach Fig. 1 erst nach Entfernen des stabförmigen Grundkörpers), Kollabieren des entstandenen glasigen Schichtkörpers zu einer massiven stabförmigen Vorform und Ziehen des Lichtwellenleiters aus dieser stabförmigen Vorform.

K.Kimmich-M.Oswald 8-1

Patentansprüche

1. Verfahren zur Herstellung von Lichtwellenleitern bei dem zunächst eine Vorform hergestellt und aus dieser der Lichtwellenleiter gezogen wird, bei dem zur Vorformherstellung pulverförmiges Glasausgangsmaterial auf einem Grundkörper abgeschieden wird, d a d u r c h   g e k e n n - z e i c h n e t, daß das pulverförmige Glasausgangsmaterial vor der Abscheidung elektrostatisch aufgeladen und zur Abscheidung auf dem Grundkörper eine das aufgeladene pulverförmige Glasausgangsmaterial anziehende Gegenelek- trode verwendet wird.

2. Verfahren nach Anspruch 2, dadurch gekennzeichnet, daß der Grundkörper ein stabförmiger Grundkörper ist, der auf einem solchen Potential liegt, daß er das aufgeladene pulverförmige Glasausgangsmaterial anzieht und somit selbst die Gegenelektrode bildet.

3. Verfahren nach Anspruch 1, dadurch gekennzeichnet, daß der Grundkörper ein Glasrohr ist, auf dessen Innenfläche das pulverförmige Glasausgangsmaterial abgeschieden wird und daß die Gegenelektrode so ausgebildet und angeordnet ist, daß sie das Glasrohr mindestens in dem Bereich der Abscheidung von außen umgibt.

ZT/P1-Kg/R

26.05.1983

K.Kimmich 8-1

4. Verfahren nach einem der Ansprüche 1 bis 3, dadurch gekennzeichnet, daß das pulverförmige Glasausgangsmaterial mittels einer Sprühvorrichtung, an deren Austrittsende sich eine Sprühdüse befindet, als Pulverströmung auf die zu beschichtende Oberfläche des Grundkörpers gerichtet wird und durch eine Relativbewegung zwischen der Sprühdüse und der zu beschichtenden Oberfläche auf dieser gleichmäßig verteilt wird.

5. Verfahren nach Anspruch 3 und 4, dadurch gekennzeichnet, daß die Sprühdüse im Innern des zu beschichtenden Glasrohres entlang der Rohrachse verschoben wird, während das Glasrohr um diese Achse gedreht wird.

6. Verfahren nach Anspruch 4 oder 5, dadurch gekennzeichnet, daß die Sprühdüse auf ein elektrisches Potential gelegt wird, derart, daß die sie durchströmenden Pulverteilchen elektrostatisch aufgeladen werden.

7. Verfahren nach einem der vorstehenden Ansprüche, dadurch gekennzeichnet, daß das auf dem Grundkörper abgeschiedene pulverförmige Glasausgangsmaterial anschließend gesintert und dabei elektrisch entladen wird.

8. Verfahren nach Anspruch 7, dadurch gekennzeichnet, daß das pulverförmige Glasausgangsmaterial in mehreren aufeinanderfolgenden Schichten abgeschieden wird und daß jede Schicht gesintert und dabei elektrisch entladen wird, bevor die darauffolgende Schicht abgeschieden wird.

K.Kimmich 8-1

9. Verfahren nach einem der vorstehenden Ansprüche, dadurch gekennzeichnet, daß bei mehreren aufeinanderabgeschiedenen Schichten die Schichtdicken durch Veränderung der Strömung des pulverförmigen Glasausgangsmaterials und/oder der Beschichtungsdauer derart abgestuft werden, daß sie bei der anschließenden Weiterverarbeitung des abgeschiedenen Materials zur Vorform in Schichten gleicher Dicke übergehen.

Fig.1

Fig.2

1/1

0127041

Inertgas

Füll-station

von der Füll-station

K.Kimmich 8-1
16. 3. 84

## EINSCHLÄGIGE DOKUMENTE

EP 84105410.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | <u>DE - A1 - 2 732 615</u> (SIEMENS AG) <br> * Patentanspruch 1 * <br> -- | 1 | C 03 B 37/025 <br> C 03 C 17/04 <br> B 05 D 1/06 |
| Y,D | <u>DE - C2 - 3 027 450</u> (STANDARD <u>ELEKTRIK LORENZ AG</u>) <br> * Patentansprüche 1,5,6; Fig. 3; Spalte 3, Zeile 14 - Spalte 4, Zeile 23 * <br> -- | 1,3 | C 03 B 20/00 <br> G 02 B 5/14 |
| A | <u>DE - B - 1 596 536</u> (N.V. PHILIPS' <u>GLOEILAMPENFABRIEKEN</u>) <br> * Gesamt * <br> -- | 1,2,4, 7 | |
| A | <u>AT - B - 53 465</u> (THE SILICA SYNDICATE) <br> * Gesamt * <br> -- | 1,4,7 | **RECHERCHIERTE SACHGEBIETE (Int. Cl. ³)** |
| A | <u>US - A - 4 377 603</u> (ITOH et al.) <br> * Spalte 1, Zeilen 9-16; Fig. 1,2 * <br> ---- | 1 | C 03 B <br> C 03 C <br> B 05 D <br> G 02 B |

Der vorliegende Recherchenbericht wurde für alle Patentansprüche erstellt.

| Recherchenort | Abschlußdatum der Recherche | Prüfer |
|---|---|---|
| WIEN | 22-08-1984 | HAUSWIRTH |